# EUROPEAN PATENT APPLICATION

(11) **EP 4 075 785 A1**
(43) Date of publication of application: **19.10.2022**
(21) Application number: 20899815.3
(22) Date of filing: 28.10.2020
(51) Int. Cl.: H04N 5/232, G06T 7/20

(54) **IMAGE PROCESSING APPARATUS, IMAGE PROCESSING SYSTEM, AND IMAGE PROCESSING METHOD**

(30) Priority: 09.12.2019 JP 2019222440
(71) Applicant: Sony Group Corporation, Minato-Ku, Tokyo, 108-0075 (JP)
(72) Inventor: USAMI, Shinnosuke, Tokyo 108-0075 (JP)
(74) Representative: D Young & Co LLP
(86) International application number: PCT/JP2020/040443
(87) International publication number: WO 2021/117367

(57) **Abstract**

Provided are a device and method that calculate a predicted motion vector corresponding to a type and posture of a tracked subject, and generate a camera control signal necessary for capturing an image of a tracked subject. There are included a predicted subject motion vector calculation unit that detects a tracked subject of a previously designated type from a captured image input from an imaging unit and calculates a predicted motion vector corresponding to a type and posture of the detected tracked subject, and a camera control signal generation unit that generates, on the basis of the predicted motion vector calculated by the predicted subject motion vector calculation unit, a camera control signal for capturing an image of a tracked image of the tracked subject. By using a neural network or the like, the predicted subject motion vector calculation unit executes processing of detecting a tracked subject of a type designated from the captured image by a user, and predicted motion vector calculation processing.

## Description

### TECHNICAL FIELD

The present disclosure relates to an image processing device and an image processing method, and a program. More specifically, the present disclosure relates to an image processing device and an image processing system, and an image processing method that perform subject tracking and image capturing.

### BACKGROUND ART

When an image of a moving subject is captured by using an imaging device (camera), an automatic tracking imaging device capable of capturing a moving image while tracking a subject is used.

For example, the imaging device is attached to a camera platform device in which an image capturing direction can be freely set, and the camera platform device is driven to follow a motion of the subject to capture an image.

Note that the automatic tracking imaging device is described in, for example, Patent Document 1 (Japanese Patent Application Laid-Open No. 2010-154391) or the like.

With many automatic tracking imaging devices, in a case where a tracked image (moving image) of a subject is captured, a user (photographer) first performs processing of selecting the subject as a tracking target.

For example, before starting the image capturing with a camera, the user checks a live view image (through image) displayed on a display unit of the camera and selects the tracking target subject.

Specifically, for example, the user selects the subject as the tracking target in the live view image displayed on a touch-panel type display screen, and sets a frame surrounding an image area of the selected subject by using a finger. Regarding an image within the framed area as a template image, a control unit of the automatic tracking imaging device drives a camera platform so as to follow an image area similar to the template image. Through such processing, the tracked image is captured.

However, in a case where the image area of the tracking target subject cannot be accurately set, it is difficult to capture an image while following the tracking target subject.

For example, in a state where the camera is unsecured, such as in a case where the user (photographer) holds the camera and tries to capture a tracked image of "bird" as a subject while following the "bird", it is difficult for the user to draw an accurate frame.

Thus, there is a problem that it is extremely difficult to draw an accurate frame surrounding a subject as a target in a situation where both the subject and a photographer are moving.

### CITATION LIST

### PATENT DOCUMENT

Patent Document 1: Japanese Patent Application Laid-Open No. 2010-154391

### SUMMARY OF THE INVENTION

### PROBLEMS TO BE SOLVED BY THE INVENTION

The present disclosure has been made in view of the above-described problem, for example, and an object thereof is to provide an image processing device and an image processing system, and an image processing method that are capable of capturing a tracked image of a tracking target subject as a target without a user (photographer) performing processing such as a frame setting on a display screen.

### SOLUTIONS TO PROBLEMS

A first aspect of the present disclosure is
an image processing device including
a predicted subject motion vector calculation unit that detects a tracked subject corresponding to a previously designated type from a captured image, and calculates a predicted motion vector corresponding to a type and posture of the detected tracked subject, and
a camera control signal generation unit that generates, on the basis of the predicted motion vector, a camera control signal for tracking the tracked subject.

Moreover, a second aspect of the present disclosure is
an image processing system including
a camera mounted on a camera platform, and a camera platform control unit that controls the camera platform,
in which the camera has
a predicted subject motion vector calculation unit that detects a tracked subject corresponding to a previously designated type from a captured image, and
calculates a predicted motion vector corresponding to a type and posture of the detected tracked subject, and
a camera control signal generation unit that generates, on the basis of the predicted motion vector, a camera control signal for tracking the tracked subject, and
the camera platform control unit
executes, on the basis of the camera control signal, camera platform control for capturing an image of a tracked image of the tracked subject.

Moreover, a third aspect of the present disclosure is
an image processing method executed in an image processing device,
in which a predicted subject motion vector calculation unit executes
a predicted subject motion vector calculation step of detecting a tracked subject corresponding to a previously designated type from a captured image, and
calculating a predicted motion vector corresponding to a type and posture of the detected tracked subject, and
a camera control signal generation unit
executes, on the basis of the predicted motion vector, a camera control signal generation step of generating a camera control signal for tracking the tracked subject.

Still other objects, features, and advantages of the present disclosure will become apparent from more detailed description based on embodiments of the present disclosure described below and the accompanying drawings. Note that, in the present specification, a system is a logical set configuration of a plurality of devices, and is not limited to one in which devices of respective configurations are in the same housing.

According to a configuration of an embodiment of the present disclosure, there are implemented a device and method that calculate a predicted motion vector corresponding to a type and posture of a tracked subject, and generate a camera control signal necessary for capturing an image of a tracked subject.

Specifically, for example, there are included a predicted subject motion vector calculation unit that detects a tracked subject of a previously designated type from a captured image input from an imaging unit and calculates a predicted motion vector corresponding to a type and posture of the detected tracked subject, and a camera control signal generation unit that generates, on the basis of the predicted motion vector calculated by the predicted subject motion vector calculation unit, a camera control signal for capturing an image of a tracked image of the tracked subject. By using a neural network or the like, the predicted subject motion vector calculation unit executes processing of detecting a tracked subject of a type designated from the captured image by a user, and predicted motion vector calculation processing.

With this configuration, there are implemented a device and method that calculate a predicted motion vector corresponding to a type and posture of a tracked subject, and generate a camera control signal necessary for capturing an image of a tracked subject.

Note that the effects described herein are only examples and are not limited thereto, and additional effects may also be present.

### BRIEF DESCRIPTION OF DRAWINGS

Fig. 1 is a diagram describing a configuration example of an automatic tracking imaging device that is an example of an image processing device according to the present disclosure.
Fig. 2 is a diagram describing tracked subject type selection processing.
Fig. 3 is a diagram describing an automatic tracking mode setting and image capturing start processing.
Fig. 4 is a diagram describing tracked subject type selection processing using a communication terminal.
Fig. 5 is a diagram describing an automatic tracking mode setting and image capturing start processing using a communication terminal.
Fig. 6 is a flowchart describing a sequence of processing executed by the image processing device according to the present disclosure.
Fig. 7 is a flowchart describing a sequence of processing executed by the image processing device according to the present disclosure.
Fig. 8 is a diagram describing a specific example of tracked subject detection processing.
Fig. 9 is a diagram describing a specific example of tracked subject detection processing.
Fig. 10 is a diagram describing a specific example of a predicted motion vector of a tracked subject.
Fig. 11 is a diagram describing a specific example of a predicted motion vector of a tracked subject.
Fig. 12 is a diagram describing a configuration example of the image processing device according to the present disclosure.
Fig. 13 is a diagram describing a specific example of processing executed by a predicted subject motion vector generation unit 110 of the image processing device according to the present disclosure.
Fig. 14 is a diagram describing a specific example of processing executed by a predicted subject motion vector generation unit 110 of the image processing device according to the present disclosure.
Fig. 15 is a diagram describing a specific example of processing executed by a camera control signal generation unit of the image processing device according
to the present disclosure.

### MODE FOR CARRYING OUT THE INVENTION

Hereinafter, details of an image processing device and an image processing system, and an image processing method according to the present disclosure will be described with reference to the drawings. Note that the description will be given according to the following items.
1. Overview of configuration of and processing by image processing device according to present disclosure
2. Sequence of processing executed by image processing device according to present disclosure
3. Details of image processing device configuration and predicted subject motion vector generation processing
4. Conclusion of present disclosure

### [1. Overview of configuration of and processing by image processing device according to present disclosure]

First, an overview of a configuration of and processing by the image processing device according to the present disclosure will be described.

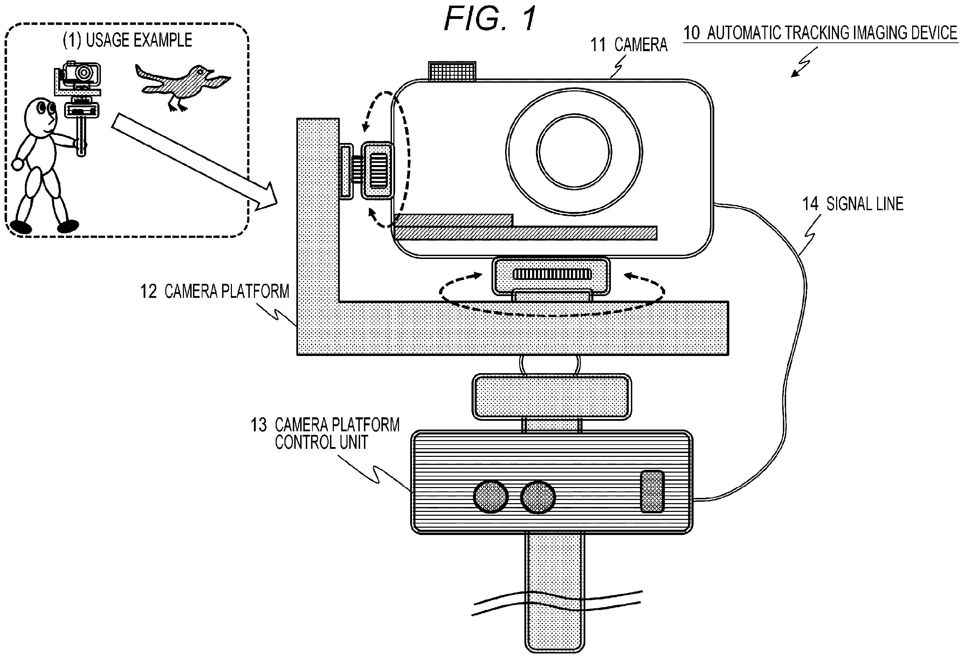

Fig. 1 is a diagram illustrating a configuration example of an automatic tracking imaging device 10 that is an example of the image processing device according to the present disclosure.

The automatic tracking imaging device 10 has a camera 11, a camera platform 12, and a camera platform control unit 13.

The camera 11 is mounted on the camera platform 12. The camera 11 is configured so that an image capturing direction thereof can be freely changed on the camera platform 12.

The camera platform control unit 13 drives and controls the camera platform 12 so as to direct the image capturing direction of the camera 11 in a direction of a preset tracked subject.

Note that, in order to capture an image of a tracked subject, it is necessary to detect the tracked subject from an image captured by a camera, analyze a direction of the detected tracked subject, and continuously execute processing of matching an image capturing direction of the camera with the analyzed direction.

For this processing, the following processing is required, for example.
(1) Processing of detecting a tracked subject from an image captured by the camera 11,
(2) Processing of calculating a camera direction for capturing an image of the detected tracked subject,
(3) Processing of generating a camera platform drive control signal for driving the camera in the calculated camera direction,
(4) Camera platform drive processing based on the generated camera platform drive control signal

These pieces of processing (1) to (4) are executed by either the camera 11 or the camera platform control unit 13.

For example, all pieces of the above-described processing (1) to (4) may be executed in the camera platform control unit 13, or the above-described processing (1) to (3) may be executed in the camera 11, and only the processing (4) may be executed in the camera platform control unit 13.

In a case where all pieces of the above-described processing (1) to (4) are executed in the camera platform control unit 13, an image captured by the camera 11 is input to the camera platform control unit 13 via a signal line 14.

The camera platform control unit 13 executes the above-described processing (1) to (4) by using the captured image.

Meanwhile, in a case where the above-described processing (1) to (3) is executed in the camera 11, and only the processing (4) is executed in the camera platform control unit 13, a camera platform drive control signal generated by the camera 11 is input to the camera platform control unit 13 via the signal line 14.

The camera platform control unit 13 executes the above-described processing (4) by using the camera platform drive control signal generated by the camera 11.

Note that, other than the above, whether either the camera 11 or the camera platform control unit 13 executes the above-described processing (1) to (4) can be set variously.

Moreover, an external device, such as an external communication terminal or an external server, which is a server on cloud for example, may execute the above-described processing (1) to (3), while communicating with the camera 11 or the camera platform control unit 13.

As described above, with many conventional automatic tracking imaging devices, in a case where a tracked image (moving image) of a subject is captured, a user (photographer) first performs processing of selecting a subject as a tracking target.

For example, the user selects the subject as the tracking target in the live view image (through image) displayed on a touch-panel type camera display screen, and sets a frame surrounding an image area of the selected subject by using a finger.

Note that subject selection processing is not limited to operation on a touch-panel type camera display screen, and may be performed by using a physical operation unit such as an operation button.

However, for example, in a state where the camera is unsecured, such as in a case where the user (photographer) holds the camera and tries to shoot a tracked image of "bird" as a subject while following the "bird", it is difficult for the user to draw an accurate frame, as in (1) Usage example illustrated in the upper left of Fig. 1

Thus, it is extremely difficult to draw an accurate frame surrounding a subject as a target in a situation where both the subject and a photographer are moving.

The image processing device according to the present disclosure solves this problem, for example, and is capable of capturing a tracked image of the subject as a target without the user (photographer) performing processing of setting a frame surrounding a tracked subject area.

Furthermore, many of conventional methods including Patent Document 1 (Japanese Patent Application Laid-Open No. 2010-154391) described above and the like are configured to predict a moving position of a subject by utilizing a plurality of pieces of frame information, and occurrence of latency time is inevitable in order to improve prediction accuracy. Therefore, there is a possibility that a high-speed subject leaves a screen before capturing the subject and starting tracking.

In contrast, a method according to the present disclosure is a method that enables image capturing of a tracked subject based on a result of estimating a posture of a tracking target subject in one frame without utilizing a plurality of pieces of frame information, and enables image capturing of the tracked subject without latency time.

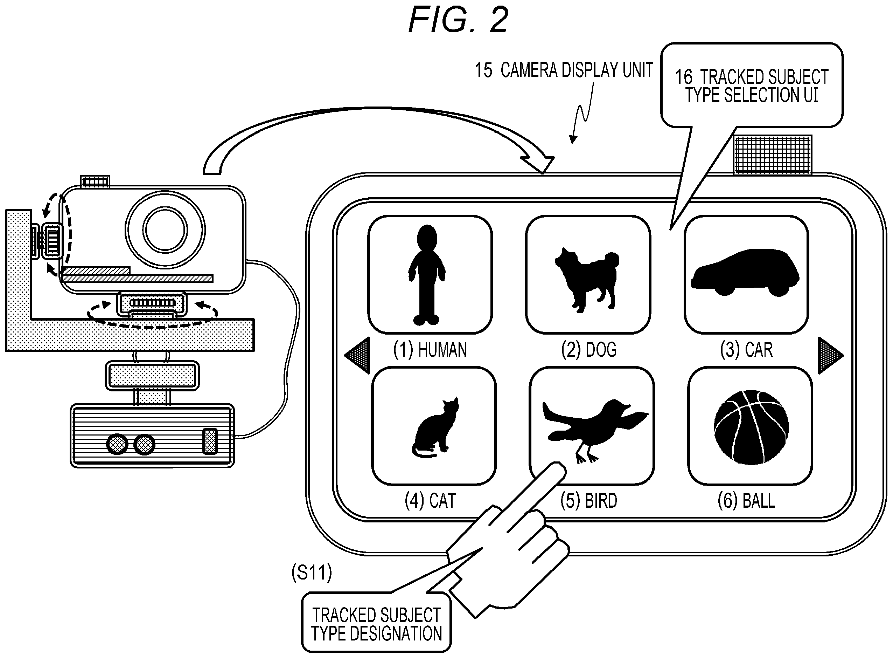

Hereinafter, an overview of processing executed by the image processing device according to the present disclosure will be described with reference to Fig. 2 and subsequent figures.

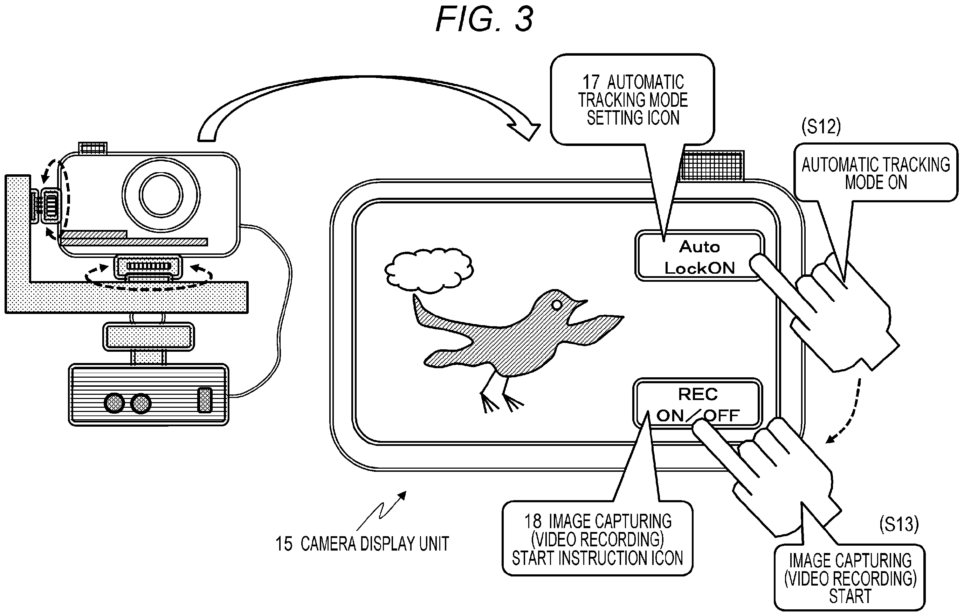

Figs. 2 and 3 are diagrams describing processing steps for capturing a moving image as a tracked image of a specific subject by using the automatic tracking imaging device 10 that is illustrated in Fig. 1 that is an example of the image processing device according to the present disclosure.

First, as illustrated in Fig. 2, by using a tracked subject type selection UI 16 displayed on a camera display unit 15, the user (photographer) selects a type of the subject to be tracked. The UI illustrated in the figure displays icons with which the following subject types can be selected.
(1) Human
(2) Dog
(3) Car
(4) Cat
(5) Bird
(6) Ball

Note that, in addition to these subject types, there are subject types that can be selected by the user, and, by sliding the screen right and left or up and down, the user can display icons indicating other various selectable subject types.

Fig. 2 illustrates an example in which the user (photographer) selects "(5) Bird" as a tracked subject type in the processing in (step S11).

The tracked subject type information selected by the user (photographer) is input to a data processing unit of the image processing device (the automatic tracking imaging device 10).

Fig. 3 illustrates next processing steps.

Fig. 3 is a diagram illustrating a state where an image is displayed on the camera display unit 15. The display image is a current image, a so-called live view image (LV image), before video recording is started.

While viewing the live view image (LV image), the user first touches, at an arbitrary timing, an automatic tracking (Auto Lock ON) mode setting icon 17 (step S12).

The touch operation of the automatic tracking (Auto Lock ON) mode setting icon 17 is input to the data processing unit of the image processing device (automatic tracking imaging device 10), and the automatic tracking processing is started. Note that an automatic tracking target subject is the tracked subject type = "bird" designated in the above (step S11).

Note that, although an image of a bird is captured on the live view image (LV image) in the example illustrated in Fig. 3, it is not essential that the image of the bird is captured on the live view image (LV image) at this time point, and the automatic tracking (Auto Lock ON) mode setting icon 17 may be touched on the screen on which the image of the bird is not captured.

Next, in (step S13), the user (photographer) touches an image capturing (video recording) start instruction icon 18. The touch operation is input to the data processing unit of the image processing device (automatic tracking imaging device 10), and image capturing (video recording) is started.

Note that the processing of touching the image capturing (video recording) start instruction icon 18 can be executed at an arbitrary timing desired by the user (photographer). Although the image of the bird is captured on the live view image (LV image) in the example illustrated in Fig. 3, it is also possible to start video recording by performing processing of touching the image capturing (video recording) start instruction icon 18 on the screen on which the image of the bird is not captured.

Image capturing (video recording) is started by processing of touching the image capturing (video recording) start instruction icon 18.

Image capturing processing is executed in the automatic tracking mode, and image capturing is executed so as to track the tracked subject type = "bird" designated in the above (step S11). That is, camera platform control for moving the image capturing direction of the camera 11 is executed so as to track the tracked subject type = "bird", and image capturing is performed.

As described with reference to Figs. 2 and 3, processing executed by the user (photographer) is the following processing.
(S11) Processing of selecting tracked subject type
(S12) Processing of setting automatic tracking mode to ON
(S13) Processing of image capturing (video recording) start instruction

With only these simple operations, it is possible to start capturing a tracked image of a subject of a type designated (selected) by the user.

That is, with the configuration according to the present disclosure, it is not necessary for the user (photographer) to perform troublesome processing of framing the tracking target subject on the screen.

Furthermore, a method according to the present disclosure is a method that enables image capturing of a tracked subject based on a result of estimating a posture of a tracking target subject in one frame without utilizing a plurality of pieces of frame information, and enables image capturing of the tracked subject without latency time.

Note that processing that the image processing device according to the present disclosure executes on the basis of the user operation in the above-described (S11) to (S13) will be described in detail later.

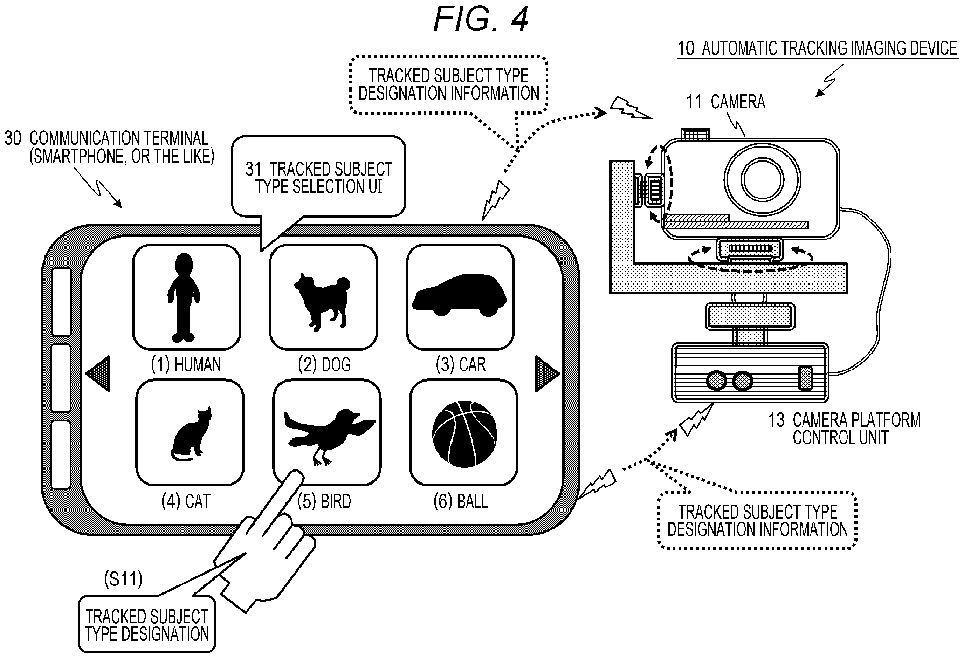

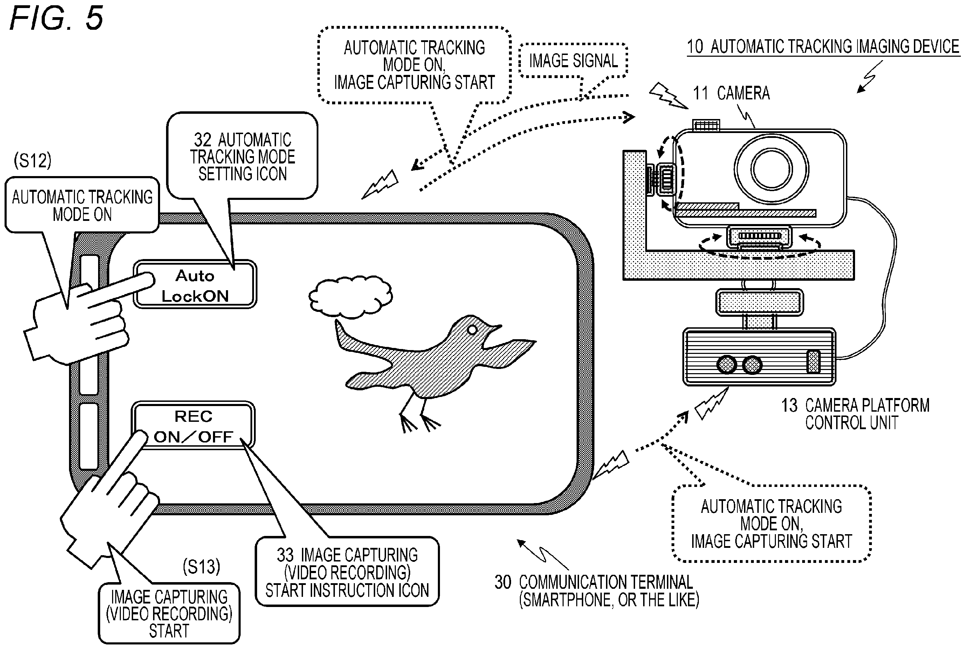

Note that another specific example of the image processing device according to the present disclosure will be described with reference to Figs. 4 and 5.

Fig. 4 illustrates a communication terminal 30 such as a smartphone (smartphone) owned by the user (photographer).

The communication terminal 30 has a configuration capable of communicating with at least either the camera 11 or the camera platform control unit 13.

A tracked subject type selection UI 31 similar to the tracked subject type selection UI described above with reference to Fig. 2 is displayed on the communication terminal 30.

Fig. 4 illustrates an example in which the user (photographer) selects "(5) Bird" as a tracked subject type in the processing in (step S11).

The tracked subject type information selected by the user (photographer) is transmitted from the communication terminal 30 to the camera 11 or the camera platform control unit 13.

Fig. 5 illustrates next processing steps executed by using the communication terminal 30.

Fig. 5 is a diagram illustrating a state where an image captured by the camera 11 is displayed on the communication terminal 30. The image captured by the camera 11 is transmitted to the communication terminal 30 via a communication unit of the camera 11 and displayed.

The display image is a current image, a so-called live view image (LV image), before video recording is started.

While viewing the live view image (LV image) displayed on the communication terminal 30, the user first touches, at an arbitrary timing in (step S12), an automatic tracking (Auto Lock ON) mode setting icon 32 displayed on the communication terminal 30.

Information of the touch operation of the automatic tracking (Auto Lock ON) mode setting icon 32 is transmitted from the communication terminal 30 to the camera 11 or to the camera platform control unit 13, and automatic tracking processing is started in the automatic tracking imaging device 10. Note that an automatic tracking target subject is the tracked subject type = "bird" designated in the above (step S11).

Next, in (step S13), the user (photographer) touches an image capturing (video recording) start instruction icon 33 displayed on the communication terminal 30. This touch operation information is transmitted from the communication terminal 30 to the camera 11 or to the camera platform control unit 13, and input to the data processing unit of the automatic tracking imaging device 10, and image capturing (video recording) is started.

Image capturing processing is executed in the automatic tracking mode, and image capturing is executed so as to track the tracked subject type = "bird" designated in the above (step S11). That is, camera platform control for moving the image capturing direction of the camera 11 is executed so as to track the tracked subject type = "bird", and image capturing is performed.

Thus, the user (photographer) may execute each of the following processing by utilizing a communication terminal such as a smartphone.
(S11) Processing of selecting tracked subject type
(S12) Processing of setting automatic tracking mode to ON
(S13) Processing of image capturing (video recording) start instruction

With only these simple operations, it is possible to start capturing a tracked image of a subject of a type designated (selected) by the user.

That is, with the configuration according to the present disclosure, it is not necessary for the user (photographer) to perform troublesome processing of framing the tracking target subject on the screen.

Furthermore, a method according to the present disclosure is a method that enables image capturing of a tracked subject based on a result of estimating a posture of a tracking target subject in one frame without utilizing a plurality of pieces of frame information, and enables image capturing of the tracked subject without latency time.

### [2. Sequence of processing executed by image processing device according to present disclosure]

Next, a sequence of processing executed by the image processing device according to the present disclosure will be described.

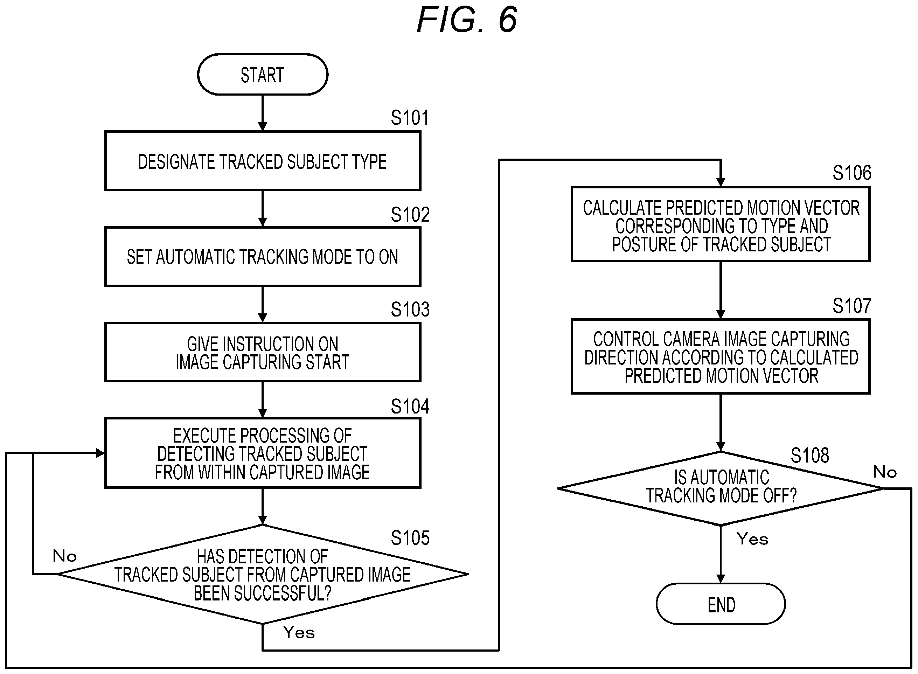

The flowchart illustrated in Fig. 6 is a flowchart describing a sequence of processing executed by the image processing device according to the present disclosure.

Note that the image processing device that executes the processing according to the flowchart illustrated in Fig. 6 is a device including the communication terminal 30 and either the automatic tracking imaging device 10 described above with reference to Figs. 1 to 3 or the automatic tracking imaging device 10 described above with reference to Figs. 4 to 5.

Hereinafter, processing in each processing step in the flowchart illustrated in Fig. 6 will be sequentially described.

### (Step S101)

First, a tracked subject type is designated in step S101.

This processing corresponds to the processing described above with reference to Fig. 2 or 4.

By using display data illustrated in Fig. 2 or 4, that is, a tracked subject type selection UI displayed on a display unit of the camera 11 or the communication terminal 30, the user (photographer) selects a type of the subject to be tracked.

The processing examples in Figs. 2 and 4 described above are examples in which the user (photographer) selects "(5) Bird" as the tracked subject type.

The tracked subject type information selected by the user (photographer) is input to a data processing unit of the image processing device (the automatic tracking imaging device 10 or the communication terminal 30) .

### (Step S102)

Next, the automatic tracking mode is set to ON in step S102.

This processing corresponds to the processing (in step S12) described above with reference to Fig. 3 or 5.

The user (photographer) touches an automatic tracking mode setting icon displayed on the display unit of the camera 11 or the communication terminal 30 to set the automatic tracking mode to ON.

Information indicating that the automatic tracking mode is set to ON is input to a data processing unit of the image processing device (the automatic tracking imaging device 10 or the communication terminal 30).

The automatic tracking target subject is the tracked subject type designated in the above (step S101), which is "bird" for example.

Note that, although the live view image (LV image) is displayed on the display unit of the camera 11 or the communication terminal 30 in Figs. 3 and 5 described above, the live view image (LV image) may or may not be displayed.

### (Step S103)

Next, an image capturing (video recording) start instruction is issued in step S103.

This processing corresponds to the processing (in step S13) described above with reference to Fig. 3 or 5.

The user (photographer) touches an image capturing (video recording) start instruction icon as described with reference to Figs. 3 and 5. This touch operation information is input to the data processing unit of the image processing device (the automatic tracking imaging device 10 or the communication terminal 30).

Note that the image capturing (video recording) start instruction can be executed at an arbitrary timing desired by the user (photographer). Although the captured image of the "bird" designated as the tracked subject is displayed on the live view image (LV image) in the examples illustrated in Figs. 3 and 5, it is also possible to start video recording by issuing an image capturing (video recording) start instruction at a screen position where the bird is not captured.

The processing in steps S101 to S103 is processing involving user operation on a UI, and these pieces of user operation information are input to the data processing unit of the image processing device (the automatic tracking imaging device 10 or the communication terminal 30), and image (moving image) capturing processing in the automatic tracking mode is started.

The tracking target is a subject matching the subject type selected in step S101, which is "bird" for example.

### (Step S104)

When the following input processing are completed in steps S101 to S103, the automatic tracking imaging device 10 starts image (moving image) capturing processing in the automatic tracking mode in step S104 and subsequent steps.
(S101) Processing of selecting tracked subject type
(S102) Processing of setting automatic tracking mode to ON
(S103) Processing of image capturing (video recording) start instruction

First, in step S104, processing of detecting the tracked subject from within the captured image is executed.

Here, the subject to be detected is a subject of the type designated by the user in step S101, which is "bird" for example.

The data processing unit of the image processing device executes processing of detecting a subject matching the tracked subject type designated from the captured image by the user (photographer). Note that determination of whether or not the subject matching the tracked subject type designated by the user (photographer) is in the captured image can be executed as processing of determining the subject to be present (1) or not to be present (0). Alternatively, processing of applying a degree of reliability may be performed in which a certain degree of reliability (a degree of reliability of 0 to 100 or the like, for example) of a subject matching the tracked subject type is calculated, and the subject is determined to be detected in a case where it is determined to be a predetermined reliability threshold value or more.

Note that this subject identification processing is executed by performing image analysis processing of the captured image. Specifically, for example, subject identification processing using training data is executed. Details of this processing will be described later.

### (Step S105)

In step S105, it is determined whether or not the processing of detecting the tracked subject from within the captured image in step S104 has been successful.

In a case where it is determined to be successful, the processing proceeds to step S106.

Meanwhile, in a case where it is determined that the processing has failed, the processing returns to step S104, and processing of detecting the tracked subject from a continuously captured image frame is executed.

As described above, the subject to be detected is a subject of the type designated by the user in step S101, which is "bird" for example.

When the "bird" is not detected in the captured image, it is determined in step S105 that the processing of detecting the tracked subject from within the captured image has failed, the processing returns to step S104, and the detection processing is performed from the next image frame.

However, for example, there may be a case where a plurality of subjects of the type designated by the user, for example, a plurality of "birds", is detected from one image frame.

In such a case, the user presets a tracking mode for which "bird" is to be set as the tracking target.

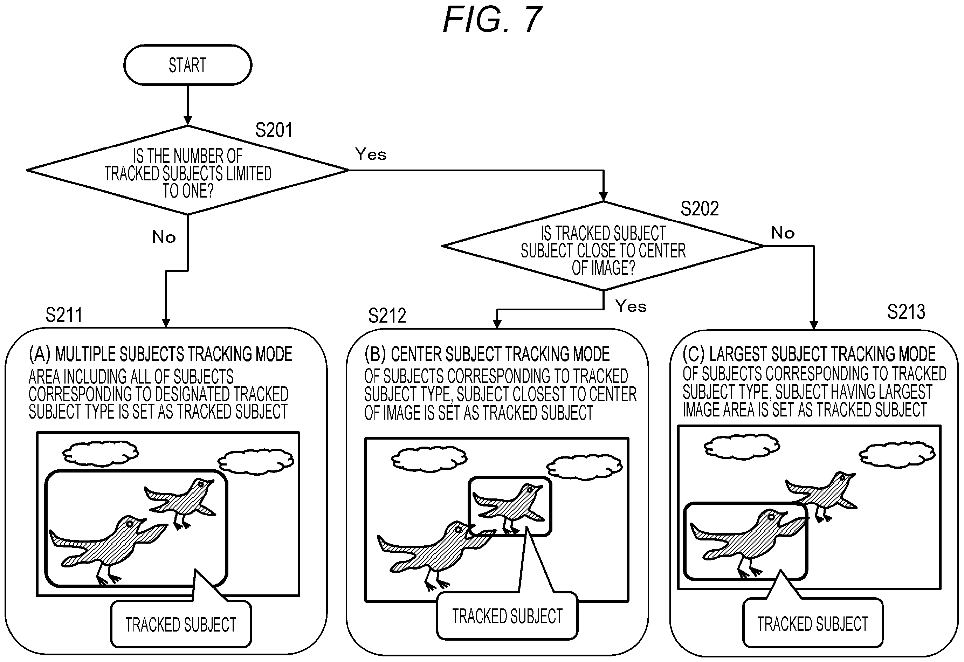

An example of a sequence of setting the tracking mode will be described with reference to the flowchart illustrated in Fig. 7.

The processing flow illustrated in Fig. 7 is tracking mode setting processing executed by input by the user (photographer), as pre-processing before starting image capturing processing in a subject tracking mode according to the flow illustrated in Fig. 6.

The tracking mode information set according to the processing illustrated in Fig. 7 is stored in a storage unit in the image processing device (the automatic tracking imaging device 10), and success determination processing of processing of detecting the tracked subject from within the captured image in steps S104 to S105 in the flow in Fig. 6 is executed according to the set tracking mode.

The processing in each step of the flow illustrated in Fig. 7 will be described.

### (Step S201)

First, in step S201, the user decides whether or not to limit the number of the tracked subjects to one, and inputs selection information. Note that the UI for inputting the selection information is displayed on the display unit of the camera 11 or the communication terminal 30 for example, and the user inputs the selection information by using the displayed UI.

In a case where the user selects a setting for limiting the number of the tracked subjects to one In step S201, the processing proceeds to step S202.

Meanwhile, in a case where the user selects a setting for not limiting the number of the tracked subjects to one in step S201, the processing proceeds to step S211.

### (Step S202)

In a case where the user selects a setting for limiting the number of the tracked subjects to one In step S201, the processing proceeds to step S202.

In this case, in step S202, the user decides whether or not the tracked subject is a subject close to a center of the image, and inputs the selection information. Note that the UI for inputting the selection information is also displayed on the display unit of the camera 11 or the communication terminal 30 for example, and the user inputs the selection information by using the displayed UI.

In a case where the user selects, in step S202, a setting in which the tracked subject is a subject close to the center of the image, the processing proceeds to step S212.

Meanwhile, in a case where the user selects, in step S202, a setting in which the tracked subject is not a subject close to the center of the image, the processing proceeds to step S213.

The selection information in steps S201 and S202 by the user is input to the data processing unit in the image processing device (the automatic tracking imaging device 10 or the communication terminal 30), and, on the basis of these pieces of input information, the data processing unit determines a subject tracking mode to be executed.

There are following three types of subject tracking modes, for example.
(A) Multiple subjects tracking mode
(B) Center subject tracking mode
(C) Largest subject tracking mode

According to the selection information in steps S201 and S202 by the user, the data processing unit in the image processing device (the automatic tracking imaging device 10 or the communication terminal 30) decides which of the tracking modes (A) to (C) described above is executed.

In a case where determination in step S201 is No, the processing proceeds to step S211, and the tracking mode to be executed is set to

### (A) Multiple subjects tracking mode.

In a case where the determination in step S201 is Yes and determination in step S202 is Yes, the processing proceeds to step S212, and the tracking mode to be executed is set to

### (B) Center subject tracking mode.

In a case where the determination in step S201 is Yes and the determination in step S202 is No, the processing proceeds to step S213, and the tracking mode to be executed is set to

### (C) Largest subject tracking mode.

Processing in steps S211 to S213 will be described.

### (Step S211)

In a case where the determination in step S201 is No, that is, in a case where the user selects a setting for not limiting the number of the tracked subjects to one in step S201, the processing proceeds to step S211.

In this case, the data processing unit of the image processing device (the automatic tracking imaging device 10 or the communication terminal 30) sets the tracking mode to be executed to

### (A) Multiple subjects tracking mode.

(A) Multiple subjects tracking mode is a mode in which, in a case where a plurality of subjects corresponding to the tracked subject type designated in step S101 in Fig. 6 is detected from the captured image, an area including all the subjects corresponding to the tracked subject type is set as the tracked subject.

As illustrated in the image (step S211) in Fig. 7, in a case where a plurality of subjects ("birds" in this example) corresponding to the tracked subject type is detected in the captured image, an area including all of these subjects is set as the tracked subject.

### (Step S212)

In a case where the determination in step S201 is Yes and the determination in step S202 is Yes, that is, in a case where the user selects the setting for limiting the number of the tracked subjects to one in step S201, and the user selects the setting in which the tracked subject is a subject close to the center of the image in step S202, the processing proceeds to step S212.

In this case, the data processing unit of the image processing device (the automatic tracking imaging device 10 or the communication terminal 30) sets the tracking mode to be executed to

### (B) Center subject tracking mode.

(B) Center subject tracking mode is a mode in which, in a case where a plurality of subjects corresponding to the tracked subject type designated in step S101 in Fig. 6 is detected from the captured image, one subject, of the plurality of detected subjects, closest to the center of the captured image is set as the tracked subject.

As illustrated in the image (step S212) in Fig. 7, in a case where a plurality of subjects ("birds" in this example) corresponding to the tracked subject type is detected in the captured image, one subject, of these detected subjects, closest to the center of the captured image is selected and set as the tracked subject.

### (Step S213)

In a case where the determination in step S201 is Yes and the determination in step S202 is No, that is, in a case where the user selects the setting for limiting the number of the tracked subjects to one in step S201, and the user does not select the setting in which the tracked subject is a subject close to the center of the image in step S202, the processing proceeds to step S213.

In this case, the data processing unit of the image processing device (the automatic tracking imaging device 10 or the communication terminal 30) sets the tracking mode to be executed to

### (C) Largest subject tracking mode.

(C) Largest subject tracking mode is a mode in which, in a case where a plurality of subjects corresponding to the tracked subject type designated in step S101 in Fig. 6 is detected from the captured image, one subject, of the plurality of detected subjects, having a largest image area is set as the tracked subject.

As illustrated in the image (step S213) in Fig. 7, in a case where a plurality of subjects ("birds" in this example) corresponding to the tracked subject type is detected in the captured image, one subject, of these detected subjects, having the largest image area within the captured image is selected and set as the tracked subject.

Tracking mode information set according to the processing flow illustrated in Fig. 7 is stored in the storage unit in the image processing device (the automatic tracking imaging device 10 or the communication terminal 30).

The above-described success determination processing of processing of detecting the tracked subject from within the captured image in steps S104 to S105 in the flow in Fig. 6 is executed according to the set tracking mode.

Note that, although three types of mode classification examples, (A) Multiple subjects tracking mode, (B) Center subject tracking mode, and (C) Largest subject tracking mode, have been described in the example illustrated in Fig. 7, another different mode may be settable. For example, a mode setting such as a leading subject selection mode may be selectable in which a leading car or human in a race or the like is set as a tracked subject.

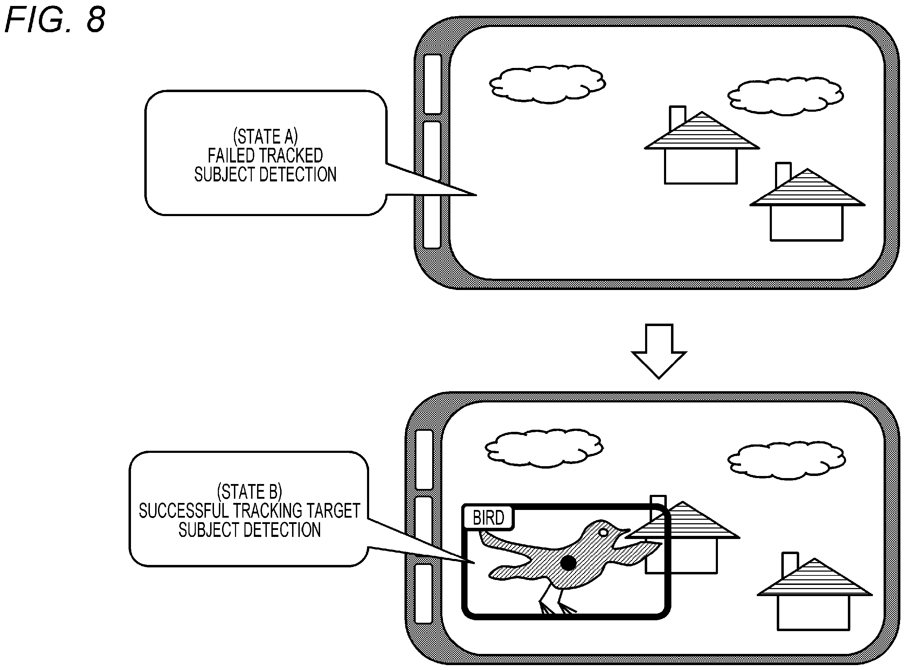

A specific example of the processing of detecting the tracked subject from the captured image will be described with reference to Fig. 8.

Fig. 8 is a diagram describing an example of the processing in steps S104 to S105 in the flow illustrated in Fig. 6, that is, the processing of detecting the tracked subject from within the captured image.

Fig. 8 illustrates a captured image on which tracked subject detection processing is executed.

Note that the example illustrated in Fig. 8 is an example of a case where the tracked subject type is set to "bird".

First, (State A) illustrated in Fig. 8 is a state where a subject corresponding to the tracked subject type = bird is not detected in a captured image. In this case, determination in step S105 is N0, and the processing returns to step S104 to execute processing of detecting a bird, which is the tracked subject, from a continuously captured image.

(State B) in Fig. 8 is a state where a subject corresponding to the tracked subject type = bird is detected in the captured image. In this state, the determination in step S105 is Yes, and the processing proceeds to step S106.

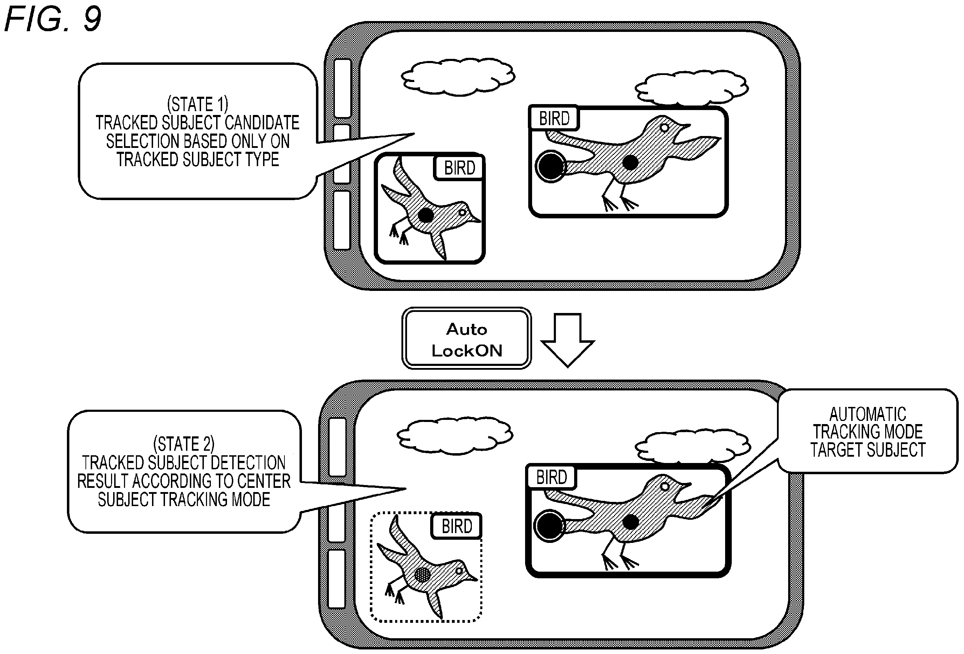

Fig. 9 is a processing example of a case where a plurality of subjects corresponding to the tracked subject type = bird is detected from the captured image.

In step S104, as illustrated in Fig. 9 (State 1), first, an image area of a bird, which is a tracked subject candidate, is detected from a captured image on the basis of the tracked subject type = bird designated by the user (photographer) in step S101.

In this example, two birds are detected, and these birds are tracked subject candidates.

Next, as a second half processing in step S104, processing of deciding the tracked subject is performed according to a preset tracking mode.

Here, it is assumed that

(B) Center subject tracking mode described above with reference to Fig. 7 is set.

According to the setting of (B) Center subject tracking mode, the data processing unit of the image processing device determines, of the two birds detected from the captured image, a bird close to a center of the image as the tracked subject. In this manner, the processing of deciding the tracked subject is executed.

Returning to Fig. 6, the processing in step S106 and subsequent steps will be described.

### (Step S106)

In a case where it is determined in step S105 that the processing of detecting the tracked subject from within the captured image in step S104 has been successful, the processing proceeds to step S106.

In step S106, the image processing device executes processing of calculating a predicted motion vector corresponding to a type and posture of the tracked subject.

The type of a tracked subject is a subject type such as a bird, a human, or a dog, for example designated as a tracked subject by the user. The posture is a posture of a bird in a tree, a posture of a bird flying, a posture of a human walking, a posture of a human running, or the like. Furthermore, the posture also includes a size of the tracked subject in the image, and processing is performed in consideration of the size of the tracked subject in the image when the predicted motion vector is calculated.

Note that the processing of calculating the predicted motion vector corresponding to the type and posture of the tracked subject is executed in the data processing unit in the image processing device (the automatic tracking imaging device 10 or the communication terminal 30).

Details of the predicted motion vector calculation processing will be described later.

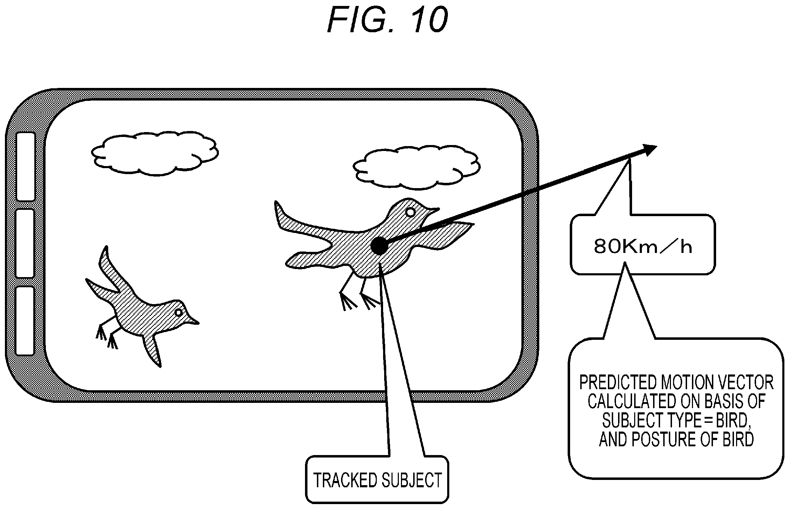

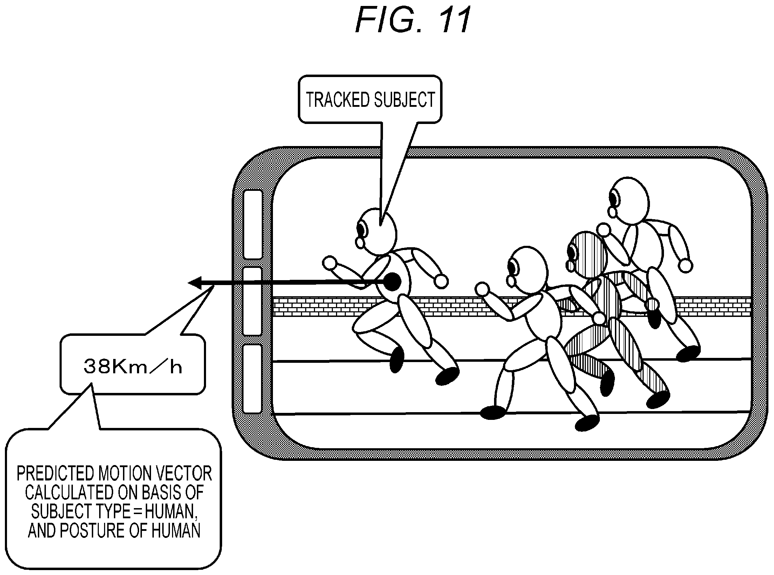

Specific examples of the predicted motion vector corresponding to the type and posture of the tracked subject will be described with reference to Figs. 10 and 11.

Fig. 10 is a diagram illustrating a specific example of a predicted motion vector corresponding to one posture of "bird" in a case where the type of the tracked subject is "bird".

In the example illustrated in Fig. 10, a vector extending in an upper right direction from a center position of the bird as the tracked subject is illustrated. This vector is a predicted motion vector of the bird as the tracked subject.

A direction of the predicted motion vector is set to a direction corresponding to a predicted moving direction of the bird as the tracked subject, and length of the predicted motion vector is set to a length corresponding to a predicted moving velocity (80 Km/h) of the bird as the tracked subject.

A specific example of the predicted motion vector calculation processing will be described later.

Fig. 11 is a diagram illustrating a specific example of a predicted motion vector corresponding to one posture of "human" in a case where the type of the tracked subject is "human".

In the example illustrated in Fig. 11, a vector extending in a left horizontal direction from a center position of the human as the tracked subject is illustrated. This vector is a predicted motion vector of the human as the tracked subject.

A direction of the predicted motion vector is set to a direction corresponding to a predicted moving direction of the human as the tracked subject, and length of the predicted motion vector is set to a length corresponding to a predicted moving velocity (38 Km/h) of the human as the tracked subject.

Thus, in step S106 illustrated in Fig. 6, processing of calculating a predicted motion vector corresponding to a type and posture of the tracked subject is executed.

As described above, processing of calculating the predicted motion vector corresponding to the type and posture of the tracked subject is executed in the data processing unit in the image processing device (the automatic tracking imaging device 10 or the communication terminal 30).

Processing of calculating a predicted motion vector corresponding to a type and posture of the tracked subject can be executed as processing using training data.

Alternatively, a table on which a predicted motion vector corresponding to a type and posture of the tracked subject is recorded in advance may be stored in the storage unit, and a predicted motion vector may be acquired with reference to the table.

Note that, although the processing of calculating a predicted motion vector according to a type and posture of the tracked subject is executed in units of, for example, frames of images captured by the camera 11 when calculating a predicted motion vector corresponding to a new image frame, processing of calculating a new predicted motion vector may be performed with reference to a predicted motion vector already calculated on the basis of a past frame such as a previous frame, or a measured motion vector reflecting an actual motion of the tracked subject, the actual motion being obtained from a past captured image.

For example, for an initial frame at a time of tracking start, a predicted motion vector is calculated on the basis of a result of analyzing the initial frame, because the initial frame does not have information corresponding to a past frame. However, for a next frame and subsequent frames, processing may be performed in which a motion predicted motion vector calculated from a latest captured image frame is compared with a measured motion vector reflecting an actual motion of the tracked subject, the actual motion being obtained from a past captured image in the past, correction processing is performed so that the difference is reduced, and a final predicted motion vector is calculated.

Furthermore, processing of setting weights to the predicted motion vector and a measured vector and calculating a final predicted motion vector by weight addition may be performed. As a use case, processing may be performed in which, in a case where the subject is in an irregular motion, the measured vector is weighted more, because accuracy is degraded if the predicted motion vector is weighted.

### (Step S107)

Next, in step S107, the image capturing direction of the camera is controlled according to the predicted motion vector corresponding to the type and posture of the tracked subject, the predicted motion vector being calculated in step S106. That is, it is assumed that the tracked subject moves according to the predicted motion vector corresponding to the type and posture of the tracked subject calculated in step S106, and a camera direction control signal for changing the image capturing direction of the camera is generated so that the image capturing direction of the camera matches the moving direction.

Moreover, the camera direction is changed according to the generated camera direction control signal.

Note that, on the basis of the predicted motion vector corresponding to the type and posture of the tracked subject calculated in step S106, the data processing unit in the image processing device (the automatic tracking imaging device 10 or the communication terminal 30) calculates a camera image capturing direction movement vector for matching the moving position of the tracked subject and the image capturing direction of the camera 11.

Moreover, the data processing unit in the image processing device (the automatic tracking imaging device 10 or the communication terminal 30) decides a drive mode (drive direction and drive amount) of the camera platform 12, the drive mode being necessary for changing the camera image capturing direction according to the calculated camera image capturing direction movement vector.

Moreover, the data processing unit in the image processing device (the automatic tracking imaging device 10 or the communication terminal 30) generates a camera platform drive control signal for driving the camera platform 12 according to the decided drive mode (drive direction and drive amount) of the camera platform 12, and outputs the generated camera platform drive control signal to the camera platform control unit 13. The camera platform control unit 13 executes drive of the camera platform 12 by applying the input camera platform drive control signal.

Through these processing, in a case where the tracked subject moves according to the predicted motion vector corresponding to the type and posture of the tracked subject calculated in step S106, the image capturing direction of the camera is controlled so that the image capturing direction of the camera matches the moving direction.

As a result, image capturing of a captured image (moving image) in which the tracked subject is tracked is possible.

Note that, not only the image capturing direction of the camera, but also camera setting information, such as pan, tilt, or zoom for example, for capturing an optimum image of the tracked subject, may also be calculated, and the calculated information may also be output to the camera 11 or the camera platform control unit 13 to perform control.

### (Step S108)

Finally, in step S108, it is determined whether or not the automatic tracking mode is set to OFF.

In a case where the automatic tracking mode is set to OFF, the image capturing processing in the automatic tracking mode ends.

In a case where the automatic tracking mode is not set to OFF, the processing returns to step S104, and the processing in steps S104 to S107 is repeated for a new captured image frame.

By this repetitive processing, the image capturing processing in the automatic tracking mode is continuously executed.

### [3. Details of image processing device configuration and predicted subject motion vector generation processing]

Next, details of a configuration of the image processing device and predicted subject motion vector generation processing will be described.

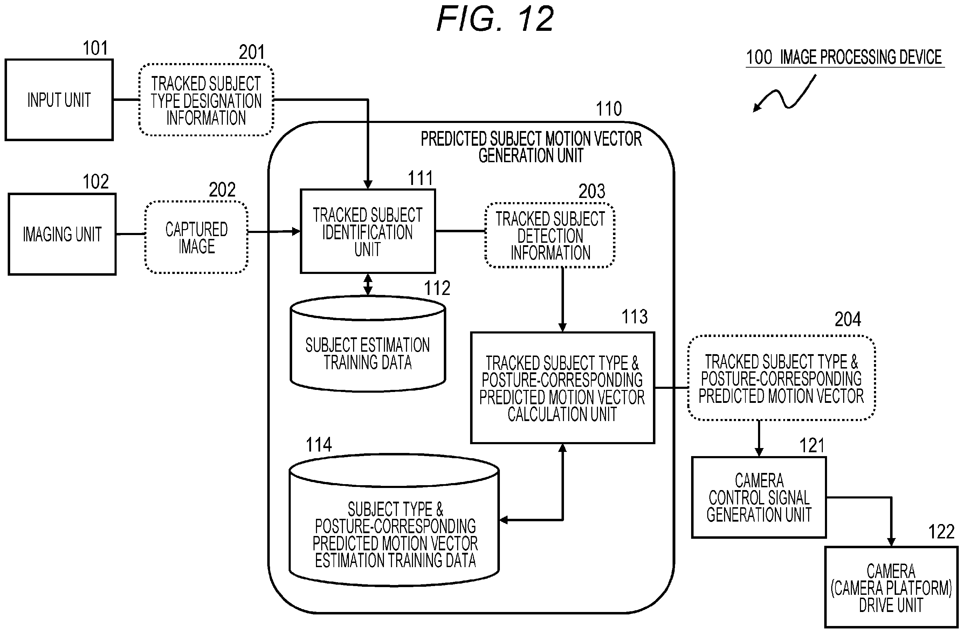

Fig. 12 illustrates a configuration example of an image processing device 100 according to the present disclosure.

The image processing device 100 illustrated in Fig. 12 corresponds to a device obtained by combining the communication terminal 30 with the automatic tracking imaging device 10 described with reference to Figs. 1 to 3 or the automatic tracking device 10 described with reference to Figs. 4 to 5.

Note that the configuration diagram illustrated in Fig. 12 is a configuration diagram obtained by extracting only a part related to processing of controlling image capturing direction of the camera executed by the image processing device according to the present disclosure. General configurations of the camera, communication terminal, and camera platform control unit are omitted.

As illustrated in Fig. 12, the image processing device 100 has an input unit 101, an imaging unit 102, a predicted subject motion vector generation unit 110, a camera control signal generation unit 121, and a camera (camera platform) drive unit 122.

The predicted subject motion vector generation unit 110 has a tracked subject identification unit 111, subject estimation training data 112, a tracked subject type & posture-corresponding predicted motion vector calculation unit 113, and tracked subject type & posture-corresponding predicted motion vector estimation training data 114.

The input unit 101 inputs, for example, tracked subject type information.

Specifically, as described above with reference to Figs. 2 and 4, by using the tracked subject type selection UI displayed on the display unit of the camera 11 or the display unit of the communication terminal 30, the user selects and inputs a type of the subject to be tracked.

Tracked subject type designation information 201 input from the input unit 101 is input to the predicted subject motion vector generation unit 110.

The imaging unit 102 corresponds to the imaging unit of the camera 11 in the configuration described with reference to Figs. 1 to 5.

The imaging unit 102 acquires a captured image such as a current image before start of video recording, which is a so-called live view image (LV image), or an image for video recording after the start of the video recording.

A captured image 202 acquired by the imaging unit 102 is input to the predicted subject motion vector generation unit 110.

The predicted subject motion vector generation unit 110 inputs the tracked subject type designation information 201 from the input unit 101, inputs the captured image 202 from the imaging unit 102, and generates and outputs a tracked subject type & posture-corresponding predicted motion vector 204 by using these pieces of input information.

The tracked subject type & posture-corresponding predicted motion vector 204 is a predicted motion vector corresponding to a type of the tracked subject, for example, a type of the tracked subject such as a bird, a dog, a human, or a ball, and a posture of the tracked subject.

For example, in a case where a tracked subject type is a bird, a length of predicted motion vector of the bird in a tree is substantially zero, whereas in a case where the bird is flying in the sky, the predicted motion vector is a vector having substantially the same direction as an orientation of a head of the bird and having a length corresponding to flight velocity of the bird.

In the predicted subject motion vector generation unit 110, first, the tracked subject identification unit 111 detects a tracked subject from the captured image 202 by using the tracked subject type designation information 201 input from the input unit 101 and the captured image 202 input from the imaging unit 102. Specifically, a tracked subject matching the tracked subject type designated by the user is detected from the captured image 202.

For example, in a case where the tracked subject type designated by the user is "bird", processing of detecting "bird" from the captured image 202, or the like is executed.

For example, in a case where the tracked subject type designated by the user is "human", processing of detecting "human" from the captured image 202, or the like is executed.

The tracked subject identification unit 111 executes subject identification processing by using the subject estimation training data 112 when performing processing of detecting the tracked subject.

The subject estimation training data 112 is data accumulated by learning processing executed in advance, and is training data capable of accumulating image characteristic information of various moving subjects such as a human, a bird, a dog, a cat, and a ball, and estimating a type of a subject from an image.

From the captured image 202 by utilizing a neural network configured by using the subject estimation training data 112 for example, the tracked subject identification unit 111 detects the tracking target, for example, "bird", that matches the tracked subject type designated by the user.

The tracked subject identification unit 111 detects an image area matching a tracked subject type, for example, "bird", designated by the user (photographer) and outputs, as a tracked subject detection information 203, a captured image in which "label = bird" is set for a detected image area.

The detection information of the tracked subject identification unit 111 is output, as the tracked subject detection information 203, to the tracked subject type & posture-corresponding predicted motion vector calculation unit 113.

The tracked subject type & posture-corresponding predicted motion vector calculation unit 113 inputs the tracked subject detection information 203 from the tracked subject identification unit 111. The tracked subject detection information 203 is a captured image in which "label = bird" is set for the image area that matches the tracked subject, for example, "bird", designated by the user. The image includes an image of a bird in a certain posture, for example, an image of a bird flying in the sky.

On the basis of the input information, the tracked subject type & posture-corresponding predicted motion vector calculation unit 113 calculates a predicted motion vector corresponding to the type and posture of the tracked subject included in the captured image 202.

The tracked subject type & posture-corresponding predicted motion vector calculation unit 113 calculates a predicted motion vector corresponding to a type of the tracked subject, for example, a type of the tracked subject such as a bird, a dog, a human, or a ball, and a posture of the tracked subject, that is, the tracked subject type & posture-corresponding predicted motion vector 204.

The tracked subject type & posture-corresponding predicted motion vector calculation unit 113 executes vector calculation processing using the tracked subject type & posture-corresponding predicted motion vector estimation training data 114 when performing processing of calculating the tracked subject type & posture-corresponding predicted motion vector 204.

The tracked subject type & posture-corresponding predicted motion vector estimation training data 114 is data accumulated by learning processing executed in advance, and is capable of accumulating motion vectors corresponding to types and postures of various moving subjects such as a human, a bird, a dog, a cat, and a ball, and estimating a motion vector of a subject from a type and posture of the subject detected from an image.

The tracked subject type & posture-corresponding predicted motion vector calculation unit 113 calculates a predicted motion vector corresponding to the type and posture of the tracked subject included in the captured image 202 by using, for example, a neural network configured by using the tracked subject type & posture-corresponding predicted motion vector estimation training data 114.

Note that the processing of calculating the predicted motion vector corresponding to the type and posture of the tracked subject by the tracked subject type & posture-corresponding predicted motion vector calculation unit 113 may be acquired from a table generated in advance, in addition to the processing using the above-described training data.

That is, a table on which a predicted motion vector corresponding to a type and posture of the tracked subject is recorded in advance may be stored in the storage unit, and a predicted motion vector may be acquired with reference to the table.

The tracked subject type & posture-corresponding predicted motion vector 204 calculated by the tracked subject type & posture-corresponding predicted motion vector calculation unit 113 is output to the camera control signal generation unit 121.

The camera control signal generation unit 121 generates a control signal for controlling the image capturing direction of the camera 11 by using the tracked subject type & posture-corresponding predicted motion vector 204 calculated by the tracked subject type & posture-corresponding predicted motion vector calculation unit 113.

That is, a camera direction control signal for setting, according to the tracked subject type & posture-corresponding predicted motion vector 204, an image capturing direction of the camera to a position to which the tracked subject moves is generated. Note that the camera direction control signal specifically corresponds to a drive control signal for the camera platform 12 that controls the image capturing direction of the camera 11.

The camera direction control signal generated by the camera control signal generation unit 121 is input to the camera (camera platform) drive unit 122.

Note that the camera (camera platform) drive unit 122 is a component of the camera platform control unit 13 illustrated in Fig. 1.

The camera (camera platform) drive unit 122 drives the camera platform on the basis of the camera direction control signal generated by the camera control signal generation unit 121.

That is, the camera platform is driven so that the image capturing direction of the camera matches, according to the tracked subject type & posture-corresponding predicted motion vector 204, the position to which the tracked subject moves.

With this processing, the image capturing direction of the camera moves according to movement of the tracked subject designated by the user (photographer), and a tracked image (moving image) of the tracked subject can be captured.

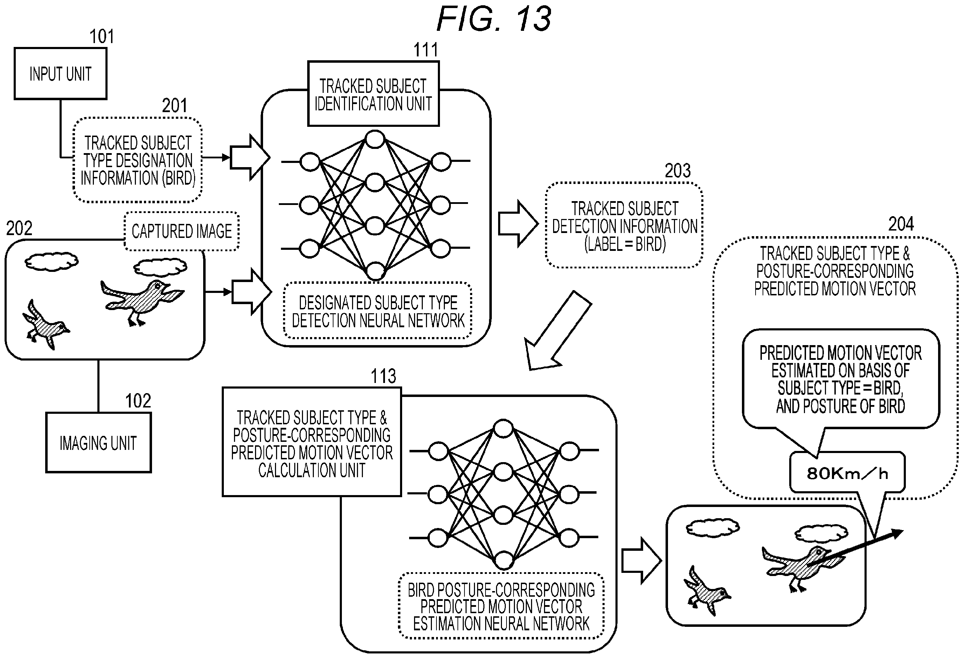

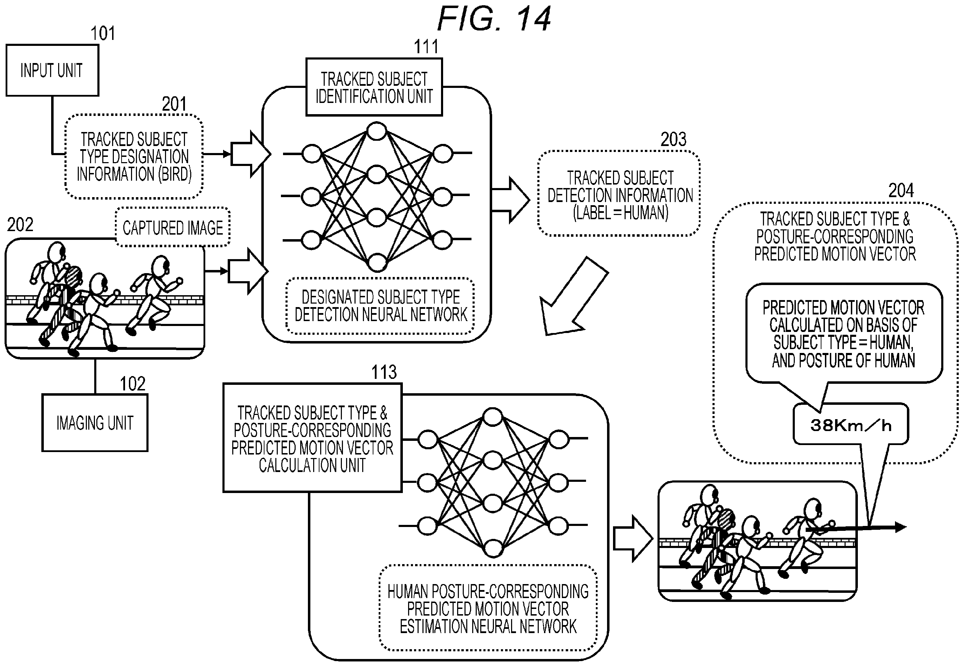

Next, specific processing examples of processing executed by the predicted subject motion vector generation unit 110, that is, processing of generating a type of the tracked subject, for example, a type of the tracked subject such as a bird, a dog, a human, or a ball, and the tracked subject type & posture-corresponding predicted motion vector 204 that is a predicted motion vector corresponding to a posture of the tracked subject, will be described with reference to Figs. 13 and 14.

Fig. 13 illustrates a processing example of a case where the type of the tracked subject designated by the user (photographer) is "bird".

Fig. 14 illustrates a processing example of a case where the type of the tracked subject designated by the user (photographer) is "human".

First, a processing example of a case where the type of the tracked subject designated by the user (photographer) is "bird" will be described with reference to Fig. 13.

Fig. 13 illustrates the tracked subject identification unit 111 and the tracked subject type & posture-corresponding predicted motion vector calculation unit 113 that are components of the predicted subject motion vector generation unit 110. Each of them has a neural network generated by training data.

The tracked subject identification unit 111 has a designated subject type detection neural network generated by the training data.

Note that the designated subject type detection neural network is a neural network that inputs the tracked subject type designation information 201 from the input unit 101 and the captured image 202 from the imaging unit 102 and outputs the tracked subject detection information 203.

In the example illustrated in Fig. 13, the tracked subject identification unit 111 detects an image area matching the tracked subject type, "bird", designated from the captured image 202 by the user (photographer) utilizing the neural network, and outputs, as the tracked subject detection information 203, a captured image in which "label = bird" is set for a detected image area.

The tracked subject detection information 203 generated by the tracked subject identification unit 111 is output to the tracked subject type & posture-corresponding predicted motion vector calculation unit 113.

The tracked subject type & posture-corresponding predicted motion vector calculation unit 113 has a bird posture-corresponding predicted motion vector estimation neural network generated by training data.

This neural network is a neural network that estimates, with a subject type = bird, a predicted motion vector corresponding to a posture of a bird.

Note that the neural network may be set, for example, in units of bird types. For example, a neural network in units of bird types such as a pigeon, a sparrow, and a swan may be applied. For example, processing of estimating a predicted motion vector corresponding to the posture of the pigeon may be performed with a subject type = pigeon.

Note that the tracked subject type & posture-corresponding predicted motion vector calculation unit 113 has a predicted motion vector estimation neural network corresponding to a subject type (human, bird, dog...), and utilizes a neural network while switching the neural network according to the subject type (human, bird, dog...) designated as the tracking target by the user.

Note that, although the tracked subject type & posture-corresponding predicted motion vector calculation unit 113 performs processing of identifying a tracked subject type and posture-corresponding predicted motion vector calculation processing in the present embodiment, processing of identifying a tracked subject type and posture-corresponding predicted motion vector calculation processing may be performed by individual processing units. Furthermore, these pieces of processing may be performed by different devices. For example, the type of the subject (whether or not the subject is a subject designated to be tracked) may be identified on a camera side, and motion prediction may be performed in another information processing device such as an external communication terminal or a server on a cloud side by using the information.

The tracked subject type & posture-corresponding predicted motion vector calculation unit 113 inputs the tracked subject detection information 203 input from the tracked subject identification unit 111, that is, a captured image in which "label = bird" is set for an image area that matches "bird", and, by utilizing a neural network, calculates the type of the tracked subject (bird) and the predicted motion vector corresponding to a posture thereof, that is, the tracked subject type & posture-corresponding predicted motion vector 204.

As illustrated in Fig. 13, the tracked subject type & posture-corresponding predicted motion vector calculation unit 113 calculates, as the tracked subject type & posture-corresponding predicted motion vector 204, a vector having an orientation in a forward direction of the bird flying in the sky as the tracked subject and having a length corresponding to the flight velocity of the bird.

The tracked subject type & posture-corresponding predicted motion vector 204 is output to the camera control signal generation unit 121. The camera control signal generation unit 121 uses the predicted motion vector to generate a camera direction control signal for setting the image capturing direction of the camera to a position to which the tracked subject moves according to the predicted motion vector.

Next, a processing example of a case where the type of the tracked subject designated by the user (photographer) is "human" will be described with reference to Fig. 14.

Similarly to Fig. 13, Fig. 14 illustrates the tracked subject identification unit 111 and the tracked subject type & posture-corresponding predicted motion vector calculation unit 113 that are components of the predicted subject motion vector generation unit 110. Each of them has a neural network generated by training data.

In the example illustrated in Fig. 14, the tracked subject identification unit 111 detects an image area matching the tracked subject type, "human", designated from the captured image 202 by the user (photographer) utilizing the neural network, and outputs, as the tracked subject detection information 203, a captured image in which "label = human" is set for a detected image area.

The tracked subject detection information 203 generated by the tracked subject identification unit 111 is output to the tracked subject type & posture-corresponding predicted motion vector calculation unit 113.

The tracked subject type & posture-corresponding predicted motion vector calculation unit 113 has a "human" posture-corresponding predicted motion vector estimation neural network generated by training data.

This neural network is a neural network that estimates a predicted motion vector corresponding to various types of humans and a posture of a human. The types of human are types such as an adult, a child, a male, and a female, and the posture of a human is, for example, a walking posture, a running posture, or the like.

Note that the neural network can also generate and utilize a neural network for each specific individual as a type of human. It is possible to generate a neural network that learns motions corresponding to various postures of a certain person A and estimates predicted motion vectors corresponding to the various postures of the certain person A on the basis of the training data.

In a case where the certain person A is detected from the captured image, it is possible to estimate a highly accurate predicted motion vector based on data unique to the person A by applying a neural network unique to the person A.

The tracked subject type & posture-corresponding predicted motion vector calculation unit 113 inputs the tracked subject detection information 203 input from the tracked subject identification unit 111, that is, a captured image in which "label = human" is set for an image area, which matches "human" and is a tracked subject selected according to a previously designated subject tracking mode, for example, a leading subject tracking mode, and, by utilizing a neural network, calculates the type of the tracked subject (human) and the predicted motion vector corresponding to a posture thereof, that is, the tracked subject type & posture-corresponding predicted motion vector 204.

As illustrated in Fig. 14, the tracked subject type & posture-corresponding predicted motion vector calculation unit 113 calculates, as the tracked subject type & posture-corresponding predicted motion vector 204, a vector having an orientation in a forward direction of the human in a running posture as the tracked subject and having a length corresponding to the velocity of the human running.

The tracked subject type & posture-corresponding predicted motion vector 204 is output to the camera control signal generation unit 121. The camera control signal generation unit 121 uses the predicted motion vector to generate a camera direction control signal for setting the image capturing direction of the camera to a position to which the tracked subject moves according to the predicted motion vector.

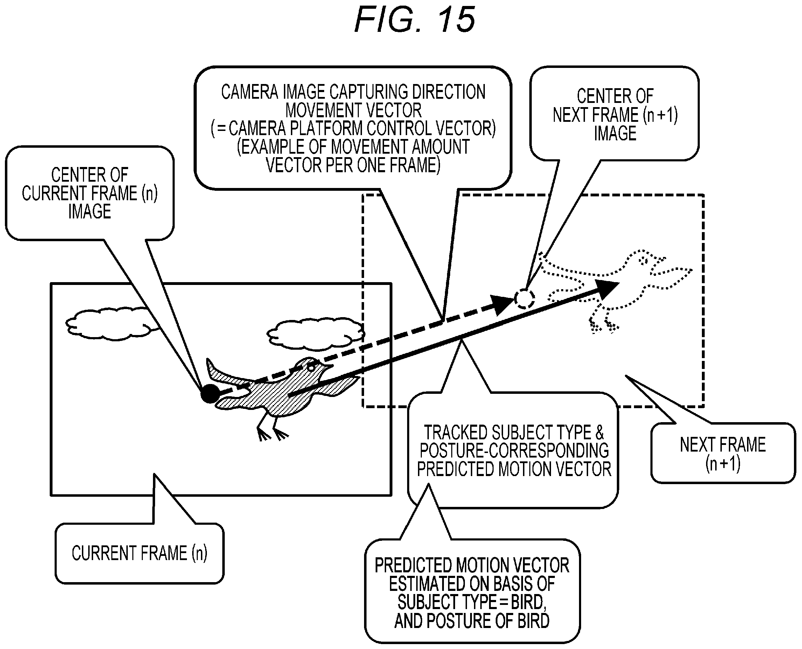

Next, a specific example of processing executed by the camera control signal generation unit 121 will be described with reference to Fig. 15.

As described above with reference to Fig. 12, the camera control signal generation unit 121 generates a control signal for controlling the image capturing direction of the camera 11 by using the tracked subject type & posture-corresponding predicted motion vector 204 calculated by the tracked subject type & posture-corresponding predicted motion vector calculation unit 113.

That is, a camera direction control signal for setting, according to the tracked subject type & posture-corresponding predicted motion vector 204, an image capturing direction of the camera to a position to which the tracked subject moves is generated. Note that the camera direction control signal specifically corresponds to a drive control signal for the camera platform 12 that controls the image capturing direction of the camera 11.

Fig. 15 is a diagram illustrating a processing example of the camera control signal generation unit 121. Fig. 15 illustrates a processing example of a case where the tracked subject is a bird.

A current frame (n), and a next frame (n + 1) to be captured by moving the camera 11 according to movement of the tracked subject are illustrated.

"Tracked subject type & posture-corresponding predicted motion vector" is indicated by a solid line in the forward and upward direction from the bird, which is a tracked subject detected in the current frame (n).

The "tracked subject type & posture-corresponding predicted motion vector" illustrated in Fig. 15 is a vector calculated on the basis of the tracked subject type & posture-corresponding predicted motion vector 204 calculated by the subject type & posture-corresponding predicted motion vector calculation unit 113, and corresponds to a vector indicating a movement destination of the subject within one frame between image capturing frames (n) and (n+1) of the camera 11.

In the next frame (n + 1), the subject is predicted to move to a position of the bird indicated by a dotted line as illustrated in the figure, and in order to capture an image of the bird at the position of the bird indicated by the dotted line in the next frame (n + 1), it is necessary to move the image capturing direction of the camera so as to capture the next frame (n + 1) indicated by the dotted line frame in the figure.

For this purpose, it is necessary to change the image capturing direction of the camera 11 from a center of the current frame (n) image, the center being indicated by a black circle in the figure, to a center of the next frame (n + 1) image, the center being indicated by a dotted-line circle in the figure.

A direction control amount is defined by the dotted-line arrow illustrated in the drawing, that is, a camera image capturing direction movement vector.

Note that the processing example illustrated in Fig. 15 is an example, and the image processing device according to the present disclosure can predict a movement vector of the tracked subject and control the subject to be at a target position (for example, a center position of an image) including the information. Therefore, it is also possible to set a bird position to a position other than the position of the bird indicated by the dotted line in the frame (n + 1) illustrated in Fig. 15. Furthermore, the image capturing direction of the camera 11 can be variously set other than the setting of changing to the center of the next frame (n + 1) image indicated by the dotted-line circle in Fig. 15.

The camera control signal generation unit 121 calculates the camera image capturing direction movement vector on the basis of the tracked subject type & posture-corresponding predicted motion vector 204 calculated by the subject type & posture-corresponding predicted motion vector calculation unit 113, and moves the image capturing direction of the camera according to the vector. With this processing, it is possible to capture a tracked image in which a tracked subject designated by the user is captured within each captured image frame.

### [4. Conclusion of present disclosure]

Hereinabove, the embodiment according to the present disclosure have been described in detail with reference to the specific embodiment. However, it is obvious that those skilled in the art may make modifications or substitutions to the embodiment without departing from the scope of the present disclosure. That is to say, the present invention has been disclosed in a form of exemplification, and should not be interpreted to be limited. In order to determine the scope of the present disclosure, the claims should be taken into consideration.

Note that the technology disclosed in the present specification can have the following configurations.
(1) An image processing device including
   a predicted subject motion vector calculation unit that detects a tracked subject corresponding to a previously designated type from a captured image, and
   calculates a predicted motion vector corresponding to a type and posture of the detected tracked subject, and
   a camera control signal generation unit that generates, on the basis of the predicted motion vector, a camera control signal for tracking the tracked subject.
(2) The image processing device according to (1),
   in which the predicted subject motion vector calculation unit has
   a tracked subject identification unit that detects a tracked subject corresponding to a designated type from the captured image, and
   a tracked subject type & posture-corresponding predicted subject motion vector calculation unit that calculates a predicted motion vector corresponding to a type and posture of the tracked subject detected by the tracked subject identification unit.
(3) The image processing device according to (1) or (2),
   in which the predicted subject motion vector calculation unit
   executes tracked subject identification processing and predicted motion vector calculation processing that use training data.
(4) The image processing device according to any one of (1) to (3),
   in which the image processing device
   has a display unit that displays a user interface (UI) for causing a user to select a type of the tracked subject, and
   the predicted subject motion vector calculation unit
   detects, from the captured image, a subject of a type corresponding to the type of the tracked subject designated by the user using the UI, and calculates a predicted motion vector corresponding to a type and posture of the detected tracked subject.
(5) The image processing device according to any one of (1) to (4),
   in which, according to automatic tracking mode start that is input by a user, the image processing device starts processing of detecting, from the captured image, a tracked subject of a previously designated type.
(6) The image processing device according to any one of (1) to (5),
   in which the predicted subject motion vector calculation unit
   has a tracked subject identification unit that detects, from the captured image by using a neural network generated on the basis of training data, a tracked subject of a type designated by a user.
(7) The image processing device according to any one of (1) to (6),
   in which the predicted subject motion vector calculation unit
   has a tracked subject type & posture-corresponding predicted subject motion vector calculation unit that calculates a predicted motion vector corresponding to a type and posture of the tracked subject by using a neural network generated on the basis of training data.
(8) The image processing device according to any one of (1) to (7),
   in which, in a case where a plurality of tracked subjects of a type designated by a user is detected in the captured image,
   the predicted subject motion vector calculation unit decides a tracked subject according to preset subject tracking mode setting information.
(9) The image processing device according to (8),
   in which the predicted subject motion vector calculation unit
   decides the tracked subject according to any one of
      (A) Multiple subjects tracking mode,
      (B) Center subject tracking mode, or
      (C) Largest subject tracking mode.
(10) The image processing device according to any one of (1) to (9),
   in which the predicted subject motion vector calculation unit
   acquires a predicted motion vector corresponding to a type and posture of the tracked subject with reference to a table on which a predicted motion vector corresponding to a type and posture of a tracked subject is recorded.
(11) The image processing device according to any one of (1) to (10),
   in which the predicted subject motion vector calculation unit
   executes calculation of a predicted motion vector in consideration of a size of the tracked subject in an image.
(12) The image processing device according to any one of (1) to (11),
   in which the predicted subject motion vector calculation unit
   calculates a predicted motion vector by utilizing a measured motion vector reflecting a motion of the tracked subject, the motion being obtained from a past captured image.
(13) The image processing device according to any one of (1) to (12),
   in which the predicted subject motion vector calculation unit
   compares a motion predicted motion vector calculated from a latest captured image with a measured motion vector reflecting a motion of a tracked subject, the motion obtained from a past captured image, and corrects the measured motion vector.
(14) The image processing device according to any one of (1) to (13),
   in which, on the basis of a predicted motion vector calculated by the predicted subject motion vector calculation unit, the camera control signal generation unit generates a control signal of a camera direction for capturing an image of a tracked image of the tracked subject.
(15) The image processing device according to any one of (1) to (14),
   in which, on the basis of a predicted motion vector calculated by the predicted subject motion vector calculation unit, the camera control signal generation unit generates a camera control signal of at least any one of pan, tilt, or zoom with a camera, for capturing an image of a tracked image of the tracked subject.
(16) An image processing system including
   a camera mounted on a camera platform; and a camera platform control unit that controls the camera platform, in which the camera has
   a predicted subject motion vector calculation unit that detects a tracked subject corresponding to a previously designated type from a captured image, and
   calculates a predicted motion vector corresponding to a type and posture of the detected tracked subject, and
   a camera control signal generation unit that generates, on the basis of the predicted motion vector, a camera control signal for tracking the tracked subject, and
   the camera platform control unit
   executes, on the basis of the camera control signal, camera platform control for capturing an image of a tracked image of the tracked subject.
(17) The image processing system according to (16),
   in which the predicted subject motion vector calculation unit of the camera has
   a tracked subject identification unit that detects a tracked subject corresponding to a designated type from the captured image, and
   a tracked subject type & posture-corresponding predicted subject motion vector calculation unit that calculates a predicted motion vector corresponding to a type and posture of the tracked subject detected by the tracked subject identification unit.
(18) An image processing method executed in an image processing device,
   in which a predicted subject motion vector calculation unit executes
   a predicted subject motion vector calculation step of detecting a tracked subject corresponding to a previously designated type from a captured image, and
   calculating a predicted motion vector corresponding to a type and posture of the detected tracked subject, and
   a camera control signal generation unit
   executes, on the basis of the predicted motion vector, a camera control signal generation step of generating a camera control signal for tracking the tracked subject.

Furthermore, the series of processing described in the specification can be executed by hardware, software, or a combined configuration of both. In a case where processing is executed by software, it is possible to install a program in which a processing sequence is recorded, on a memory in a computer incorporated in dedicated hardware and execute the program, or it is possible to install and execute the program on a generalpurpose personal computer that is capable of executing various kinds of processing. For example, the program can be previously recorded on a recording medium. In addition to installation from the recording medium to the computer, the program can be received via a network such as a local area network (LAN) or the Internet and installed on a recording medium such as a built-in hard disk.

Note that the various kinds of processing described in the specification may be executed not only in time series according to the description but also in parallel or individually, according to processing capability of a device that executes the processing, or as necessary. Furthermore, in the present specification, a system is a logical set configuration of a plurality of devices, and is not limited to a system in which devices of respective configurations are in the same housing.

### INDUSTRIAL APPLICABILITY

As described above, according to a configuration of an embodiment of the present disclosure, there are implemented a device and method that calculate a predicted motion vector corresponding to a type and posture of a tracked subject, and generate a camera control signal necessary for capturing an image of a tracked subject.

Specifically, for example, there are included a predicted subject motion vector calculation unit that detects a tracked subject of a previously designated type from a captured image input from an imaging unit and calculates a predicted motion vector corresponding to a type and posture of the detected tracked subject, and a camera control signal generation unit that generates, on the basis of the predicted motion vector calculated by the predicted subject motion vector calculation unit, a camera control signal for capturing an image of a tracked image of the tracked subject. By using a neural network or the like, the predicted subject motion vector calculation unit executes processing of detecting a tracked subject of a type designated from the captured image by a user, and predicted motion vector calculation processing.

With this configuration, there are implemented a device and method that calculate a predicted motion vector corresponding to a type and posture of a tracked subject, and generate a camera control signal necessary for capturing an image of a tracked subject.

### REFERENCE SIGNS LIST

10 Automatic tracking imaging device
11 Camera
12 Camera platform
13 Camera platform control unit
15 Camera display unit
16 Tracked subject type selection UI
17 Automatic tracking mode setting icon
18 Image capturing (video recording) start instruction icon
30 Communication terminal
31 Tracked subject type selection UI
32 Automatic tracking mode setting icon
338 Image capturing (video recording) start instruction icon
100 Image processing device
101 Input unit
102 Imaging unit
110 Predicted subject motion vector generation unit
111 Tracked subject identification unit
112 Subject estimation training data
113 Tracked subject type & posture-corresponding predicted motion vector calculation unit
114 Tracked subject type & posture-corresponding predicted motion vector estimation training data
121 Camera control signal generation unit
122 Camera (camera platform) drive unit
201 Tracked subject type designation information
202 Captured image
203 Tracked subject detection information
204 Tracked subject type & posture-corresponding predicted motion vector

## Claims

1. An image processing device comprising:
a predicted subject motion vector calculation unit that detects a tracked subject corresponding to a previously designated type from a captured image, and
calculates a predicted motion vector corresponding to a type and posture of the detected tracked subject; and
a camera control signal generation unit that generates, on a basis of the predicted motion vector, a camera control signal for tracking the tracked subject.

2. The image processing device according to claim 1,
wherein the predicted subject motion vector calculation unit has
a tracked subject identification unit that detects a tracked subject corresponding to a designated type from the captured image, and
a tracked subject type & posture-corresponding predicted subject motion vector calculation unit that calculates a predicted motion vector corresponding to a type and posture of the tracked subject detected by the tracked subject identification unit.

3. The image processing device according to claim 1,
wherein the predicted subject motion vector calculation unit
executes tracked subject identification processing and predicted motion vector calculation processing that use training data.

4. The image processing device according to claim 1, wherein the image processing device has a display unit that displays a user interface (UI) for causing a user to select a type of the tracked subject, and
the predicted subject motion vector calculation unit
detects, from the captured image, a subject of a type corresponding to the type of the tracked subject designated by the user using the UI, and calculates a predicted motion vector corresponding to a type and posture of the detected tracked subject.

5. The image processing device according to claim 1,
wherein, according to automatic tracking mode start that is input by a user, the image processing device starts processing of detecting, from the captured image, a tracked subject of a previously designated type.

6. The image processing device according to claim 1,
wherein the predicted subject motion vector calculation unit
has a tracked subject identification unit that detects, from the captured image by using a neural network generated on a basis of training data, a tracked subject of a type designated by a user.

7. The image processing device according to claim 1,
wherein the predicted subject motion vector calculation unit
has a tracked subject type & posture-corresponding predicted subject motion vector calculation unit that calculates a predicted motion vector corresponding to a type and posture of the tracked subject by using a neural network generated on a basis of training data.

8. The image processing device according to claim 1,
wherein, in a case where a plurality of tracked subjects of a type designated by a user is detected in the captured image, the predicted subject motion vector calculation unit decides a tracked subject according to preset subject tracking mode setting information.

9. The image processing device according to claim 8,
wherein the predicted subject motion vector calculation unit
decides the tracked subject according to any one of
(A) Multiple subjects tracking mode,
(B) Center subject tracking mode, or
(C) Largest subject tracking mode.

10. The image processing device according to claim 1,
wherein the predicted subject motion vector calculation unit
acquires a predicted motion vector corresponding to a type and posture of the tracked subject with reference to a table on which a predicted motion vector corresponding to a type and posture of a tracked subject is recorded.

11. The image processing device according to claim 1,
wherein the predicted subject motion vector calculation unit
executes calculation of a predicted motion vector in consideration of a size of the tracked subject in an image.

12. The image processing device according to claim 1,
wherein the predicted subject motion vector calculation unit
calculates a predicted motion vector by utilizing a measured motion vector reflecting a motion of the tracked subject, the motion being obtained from a past captured image.

13. The image processing device according to claim 1,
wherein the predicted subject motion vector calculation unit
compares a motion predicted motion vector calculated from a latest captured image with a measured motion vector reflecting a motion of a tracked subject, the motion obtained from a past captured image, and corrects the predicted motion vector.

14. The image processing device according to claim 1,
wherein, on a basis of a predicted motion vector calculated by the predicted subject motion vector calculation unit, the camera control signal generation unit generates a control signal of a camera direction for capturing an image of a tracked image of the tracked subject.

15. The image processing device according to claim 1,
wherein, on a basis of a predicted motion vector calculated by the predicted subject motion vector calculation unit, the camera control signal generation unit generates a camera control signal of at least any one of pan, tilt, or zoom with a camera, for capturing an image of a tracked image of the tracked subject.

16. An image processing system comprising:
a camera mounted on a camera platform; and a camera platform control unit that controls the camera platform,
wherein the camera has
a predicted subject motion vector calculation unit that detects a tracked subject corresponding to a previously designated type from a captured image, and
calculates a predicted motion vector corresponding to a type and posture of the detected tracked subject, and
a camera control signal generation unit that generates, on a basis of the predicted motion vector, a camera control signal for tracking the tracked subject, and
the camera platform control unit
executes, on a basis of the camera control signal, camera platform control for capturing an image of a tracked image of the tracked subject.

17. The image processing system according to claim 16,
wherein the predicted subject motion vector calculation unit of the camera has
a tracked subject identification unit that detects a tracked subject corresponding to a designated type from the captured image, and
a tracked subject type & posture-corresponding predicted subject motion vector calculation unit that calculates a predicted motion vector corresponding to a type and posture of the tracked subject detected by the tracked subject identification unit.

18. An image processing method executed in an image processing device,
wherein a predicted subject motion vector calculation unit executes
a predicted subject motion vector calculation step of detecting a tracked subject corresponding to a previously designated type from a captured image, and
calculating a predicted motion vector corresponding to a type and posture of the detected tracked subject, and
a camera control signal generation unit executes, on a basis of the predicted motion vector, a camera control signal generation step of generating a camera control signal for tracking the tracked subject.
